# EUROPÄISCHE PATENTSCHRIFT

(11) **EP 2 338 754 B1**
(45) Veröffentlichungstag und Bekanntmachung des Hinweises auf die Patenterteilung: **15.05.2013**
(21) Anmeldenummer: 10195130.9
(22) Anmeldetag: 15.12.2010
(51) Int. Cl.: B60T 13/68

(54) **Elektrisch betätigbares Feststellbremssystem und Verfahren zum Steuern eines elektrisch betätigbaren Feststellbremssystems**
Electrically actuated handbrake and method for controlling same
Système de frein de stationnement pouvant être actionné de manière électrique et procédé de commande d'un système de frein de stationnement pouvant être actionné de manière électrique

(30) Priorität: 21.12.2009 DE 102009059898
(43) Veröffentlichungstag der Anmeldung: 29.06.2011
(73) Patentinhaber: KNORR-BREMSE Systeme für Nutzfahrzeuge GmbH, 80809 München (DE)
(72) Erfinder: Kaupert, Oliver, 80995, München (DE); Uslu, Mustapha, 81373, München (DE); Schnittger, Karsten, 80935, München (DE)
(74) Vertreter: Mattusch, Gundula

(56) Entgegenhaltungen:
- DE-A1-102007 061 908
- DE-B3-102008 007 877

## Beschreibung

Die Erfindung betrifft ein elektrisch betätigbares Feststellbremssystem für eine pneumatische Bremsanlage, mit einer Steuerventileinrichtung, die einen ersten Arbeitsanschluss, einen zweiten Arbeitsanschluss, einen Entlüftungsanschluss und einen pneumatischen Steuereingang aufweist, wobei die Steuerventileinrichtung durch Belüften des Steuereingangs einen ersten Schaltzustand einnimmt, in dem die Arbeitsanschlüsse miteinander verbunden sind und in dem der zweite Arbeitsanschluss gegen den Entlüftungsanschluss abgedichtet ist, und die Steuerventileinrichtung durch Entlüften des Steuereingangs und Federkraft einen zweiten Schaltzustand einnimmt, in dem die Arbeitsanschlüsse gegeneinander abgedichtet sind und der zweite Arbeitsanschluss mit dem Entlüftungsanschluss verbunden ist, wobei
- der erste Arbeitsanschluss wahlweise von einer Druckluftquelle mit Druckluft versorgt oder entlüftet werden kann,
- der zweite Arbeitsanschluss mit einem Druckluftverbraucher koppelbar ist,
- der pneumatische Steuereingang zumindest mittelbar mit dem Steuereingang eines Relaisventils für die Feststellbremse gekoppelt ist,
- der Entlüftungsanschluss mit einer Steuer- und Entlüftungsventileinrichtung gekoppelt ist,
- die Steuer- und Entlüftungsventileinrichtung geeignet ist, den Entlüftungsanschluss zu belüften, und
- der Steuereingang außerhalb der Steuerventileinrichtung mit dem zweiten Arbeitsanschluss der Steuerventileinrichtung kommuniziert.

Die Erfindung betrifft weiterhin ein Verfahren zum Steuern eines elektrisch betätigbares Feststellbremssystems.

Die vorliegende Offenbarung befasst sich mit elektrisch betätigbaren Feststellbremssystemen, wie sie beispielsweise in der DE 10 2008 007 877 B3 beschrieben sind. Eine zentrale sicherheitsrelevante Anforderung an derartige Systeme besteht darin, dass ein Stromausfall nicht zu einer Zustandsänderung der Feststellbremsen führen darf- befindet sich die Feststellbremse in ihrem Parkzustand, so muss auch bei Stromausfall der Parkzustand aufrechterhalten werden, um so ein unbeabsichtigtes Wegrollen des Nutzfahrzeugs in jedem Fall zu verhindern, befindet sich die Feststellbremse in einem Fahrzustand, so darf bei Stromausfall die Feststellbremse nicht schlagartig eingelegt werden, da dies während der Fahrt zu gefährlichen Situationen führen kann.

Um diesen sicherheitsrelevanten Anforderungen zu genügen, können bistabile Steuerventile eingesetzt werden. Diese können elektrisch oder pneumatisch ansteuerbar sein. Die vorliegende Erfindung befasst sich mit pneumatisch ansteuerbaren Schaltventileinrichtungen, die in der Weise in ein elektrisch betätigbares Feststellbremssystem eingebunden sind, dass eine Bistabilität gegeben ist und somit den vorstehend erwähnten sicherheitsrelevanten Anforderungen genügt wird.

Elektrisch betätigbare Feststellbremssysteme und insbesondere die erwähnten pneumatischen Steuerventileinrichtungen sind so auszulegen, dass absolute Schaltsicherheit gewährleistet ist. Werden die Druckverhältnisse im Feststellbremssystem also umgestellt, um ein Umschalten der Steuerventileinrichtung zu bewirken, so muss die Steuerventileinrichtung sicher schalten können, und dies bei jeglichen äußeren Umständen, insbesondere auch bei tiefen Temperaturen, welche ein Umschalten der Schaltventileinrichtung insbesondere aufgrund erhöhter Reibungskräfte behindern können.

Der Erfindung liegt die Aufgabe zugrunde, ein Konzept zur Verfügung zu stellen, bei dem die Bistabilität einer pneumatischen Steuerventileinrichtung für ein elektrisch betätigbares Feststellbremssystem gewährleistet ist, wobei absolute Schaltsicherheit auch bei tiefen Temperaturen gegeben sein soll. Dabei sollen insbesondere Lösungen angeboten werden, welche mit einem möglichst geringen Verschleiß der Systemkomponenten und insbesondere der pneumatischen Steuerventileinrichtung einhergehen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem eingangs genannten gattungsgemäßen Stand der Technik dadurch auf, dass zwischen dem Steuereingang und dem zweiten Arbeitsanschluss eine Drossel vorgesehen ist, die bei einer Überführung der Steuer- und Entlüftungsventileinrichtung in eine entlüftende Stellung für eine vorübergehende Druckdifferenz zwischen dem Steuereingang und dem zweiten Arbeitsanschluss sowie dem dann mit dem zweiten Arbeitsanschluss in Verbindung stehenden Entlüftungsanschluss sorgt, so dass die Steuerventileinrichtung von ihrem zweiten Schaltzustand in ihren ersten Schaltzustand überführt wird. Auf diese Weise kann eine dynamische Umschaltung der Steuerventileinrichtung erreicht werden, ohne dass die Ventileinrichtung im Hinblick auf ihre Wirkflächen so konstruiert sein müsste, dass ein statischer Druckzustand an den Anschlüssen der Steuerventileinrichtung zum Umschalten der Steuerventileinrichtung führt. Hierdurch ist größere Konstruktionsfreiheit im Hinblick auf die Steuerventileinrichtung gegeben. Insbesondere kann ein Steuerkolben der Steuerventileinrichtung über nur zwei radiale Dichtungen, das heißt insbesondere O-Ringe, im Ventilgehäuse geführt werden, was die beim Umschalten zu überwindenden Reibungskräfte herabsetzt.

In diesem Zusammenhang kann insbesondere vorgesehen sein, dass die Steuerventileinrichtung einen Steuerkolben aufweist und dass eine Differenz zwischen einer über den Entlüftungsanschluss zu belüftenden wirksamen Fläche des Steuerkolbens zu einer über den zweiten Arbeitsausgang in dem zweiten Schaltzustand zu belüftenden wirksamen Fläche des Steuerkolbens unter Berücksichtigung einer den Steuerkoben in seinen zweiten Schaltzustand treibenden Federkraft nicht ausreicht, um den Steuerkolben bei identischen Drücken an beiden Flächen in seinen ersten Schaltzustand zu überführen.

Die Erfindung ist in nützlicher Weise so ausgebildet, dass der Steuereingang über ein Select-Low-Ventil mit dem zweiten Arbeitsanschluss verbunden ist und dass die Drossel zwischen dem Steuereingang und dem Select-Low-Ventil angeordnet ist. Auf diese Weise wird nur der entscheidende Bereich am Steuereingang der Steuerventileinrichtung verzögert entlüftet, die anderen Leitungsbereiche können an der anfänglichen Belüftung unmittelbar teilnehmen.

Es kann auch vorgesehen sein, dass eine Drosselwirkung des Select-Low-Ventils ausreicht um die erforderliche vorübergehende Druckdifferenz zwischen dem Steuereingang und dem zweiten Arbeitsanschluss sowie dem dann mit dem zweiten Arbeitsanschluss in Verbindung stehenden Entlüftungsanschluss zu gewährleisten. Aufgrund der Integration ist ein separates Bauteil entbehrlich.

Gemäß einer weiteren Ausführungsform der vorliegenden Erfindung ist vorgesehen, dass an dem zweiten Arbeitsanschluss eine zu einem Steuereingang eines Anhängersteuermoduls führende Leitung angeschlossen ist und dass diese Leitung mit einer Drossel ausgestattet ist. Das primär schnell zu entlüftende Volumen am Entlüftungsanschluss der Steuereinrichtung wird auf diese Weise verringert, so dass die erforderliche kurzzeitige Druckdifferenz zwischen dem Entlüftungsanschluss und dem Steuereingang sicher erreicht wird.

Die Erfindung betrifft weiterhin ein Verfahren zum Überführen eines solchen elektrisch betätigbaren Feststellbremssystems von einem Parkzustand in einen Fahrzustand bei dem die Steuer- und Entlüftungsventileinrichtung von einem den Entlüftungsanschluss der Steuerventileinrichtung belüftenden in einen entlüftenden Zustand überführt wird, wodurch der Druck an dem Entlüftungsanschluss und an dem Steuereingang sinkt, wobei der Druck an dem Steuereingang langsamer sinkt als an dem Entlüftungsanschluss.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm eines elektrisch betätigbaren Feststellbremssystems;
- Figur 2: eine Steuerventileinrichtung mit einem verschiebbaren Ventilsitz in einer Fahrstellung;
- Figur 3: eine Steuerventileinrichtung mit einem verschiebbaren Ventilsitz in einer Zwischenstellung;
- Figur 4: eine Steuerventileinrichtung mit einem verschiebbaren Ventilsitz in einer Parkstellung;
- Figur 5: eine Steuerventileinrichtung mit einem festen Ventilsitz in einer Fahrstellung;
- Figur 6: eine Steuerventileinrichtung mit einem festen Ventilsitz in einer Parkstellung;
- Figur 7: eine Steuerventileinrichtung mit einem zwei radiale Dichtungen aufweisenden Steuerkolben in einer Fahrstellung;
- Figur 8: eine Steuerventileinrichtung mit einem zwei radiale Dichtungen aufweisenden Steuerkolben in einer Parkstellung;
- Figur 9: eine schematische Darstellung eines elektrisch betätigbaren Feststellbremssystems in einem ersten Zustand;
- Figur 10: eine schematische Darstellung eines elektrisch betätigbaren Feststellbremssystems in einem zweiten Zustand; und
- Figur 11: eine schematische Darstellung eines elektrisch betätigbaren Feststellbremssystems in einem dritten Zustand.

Bei der nachfolgenden Beschreibung der Schaltungsdiagramme und der Schnittansichten von Ventileinrichtungen bezeichnen gleiche Bezugszeichen gleiche oder vergleichbare Komponenten. Die Schaltungen umfassen als zentrale Einrichtungen 3/2-Wegeventile.

Diese können jeweils durch zwei 2/2-Wegeventile ersetzt werden, wobei die anhand der 3/2-Wegeventile erläuterten Grundsätze dann im Rahmen der vorliegenden Erfindung auf die 2/2-Wegeventilgruppen zu übertragen sind.

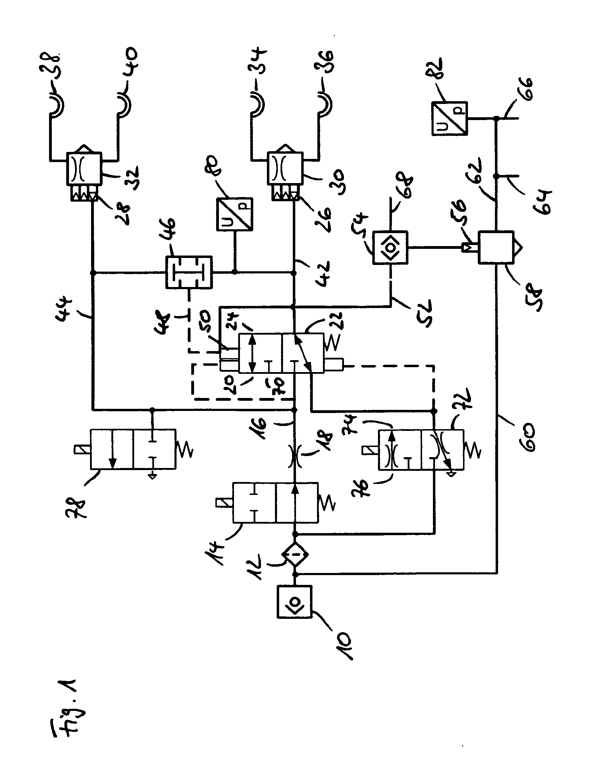

Figur 1 zeigt ein Schaltungsdiagramm eines elektrisch betätigbaren Feststellbremssystems. Das elektrisch betätigbare Feststellbremssystem ist über ein Rückschlagventil 10 mit einer nicht dargestellten Druckluftaufbereitungsanlage verbunden. Auf das Rückschlagventil 10 folgt eine optionale Filtereinheit 12, über die Druckluft einem Versorgungsmagnetventil 14, das als 2/2-Wegeventil ausgelegt ist, zugeführt wird. An den Ausgang des Versorgungsmagnetventils 14 ist über einen Versorgungsleitungsabschnitt 16 und eine optionale Drossel 18 ein Arbeitsanschluss 20 einer Steuerventileinrichtung 22 angeschlossen. Die Steuerventileinrichtung 22 ist als pneumatisch ansteuerbares 3/2-Wegeventil ausgelegt. Ein zweiter Arbeitsanschluss 24 der Steuerventileinrichtung 22 führt zu einem Steuereingang 26 eines Anhängersteuermoduls 30. Dieses bedient einen Versorgungsanschluss 34 und einen Steueranschluss 36 der Anhängerkupplung. Ein Steuereingang 28 eines weiteren Anhängersteuermoduls 32 ist über einen Anhängersteuerleitungszweig 44 mit dem Versorgungsleitungszweig 16 verbunden. Es hat einen Versorgungsanschluss 38 und einen Steueranschluss 40. Die Anhängersteuerleitungszweige 42, 44 sind mit Eingängen eines Select-Low-Ventils 46 verbunden, dessen Ausgang über eine Steuerleitung 48 mit einem Steuereingang 50 der Steuerventileinrichtung 22 verbunden ist. Das Select-Low-Ventil arbeitet so, dass an seinem Ausgang, das heißt in der Steuerleitung 48, der niedrigere Eingangsdruck ansteht, das heißt der niedrigere Druck aus den beiden Anhängersteuerungsleitungszweigen 42, 44. Die Steuerleitung 48 steht weiterhin über eine Relaissteuerleitung 52 und ein Wechselventil 54 mit dem Relaissteuereingang 56 eines Relaisventils 58 in Verbindung. Das Relaisventil 58 bezieht über eine Relaisversorgungsleitung 60 Druckluft von einer Stelle stromaufwärts des Versorgungsmagnetventils 14. Eine Relaisausgangsleitung führt zu Leitungszweigen 64, 66, an denen nicht dargestellte Federspeicherzylinder angeschlossen sind. An dem Wechselventil 54 ist ferner eine Betriebsbremsleitung 68 angeschlossen. Mit einem Entlüftungsanschluss 70 der Steuerventileinrichtung 22 ist ein Anschluss 74 einer Steuer- und Entlüftungsventileinrichtung 72 verbunden. Ein weiterer Anschluss 76 der Steuer- und Entlüftungsventileinrichtung 72 wird von einem Punkt zwischen der Filtereinheit 12 und dem Versorgungsmagnetventil 14 mit Druckluft versorgt. Weiterhin ist ein als ein 2/2-Wegeventil ausgelegtes Entlüftungsventil 78 vorgesehen, das mit dem Versorgungsleitungsabschnitt 16 verbunden ist. Es sind ferner Drucksensoren 80, 82 zum Erfassen der Drücke an dem zweiten Arbeitsanschluss 24 der Steuerventileinrichtung 22 sowie der Relaisausgangsleitung 62 vorgesehen.

In dem in Figur 1 dargestellten Schaltzustand ist der zweite Arbeitsausgang der Steuerventileinrichtung 22 über die Steuer- und Entlüftungsventileinrichtung 72 entlüftet, so dass in Abwesenheit einer Druckbeaufschlagung über die Betriebsbremsleitung 68 auch der Steuereingang 56 des Relaisventils 58 entlüftet ist. Folglich sind die nicht dargestellten Federspeicherzylinder drucklos, so dass sich die Feststellbremse in ihrer Parkstellung befindet. Zum Überführen der Feststellbremse in eine Fahrstellung wird nun die Steuer-und Entlüftungsventileinrichtung 72 umgeschaltet. Folglich baut sich insbesondere in dem Steuerleitungszweig 48, der Relaissteuerleitung 52 und an dem Relaissteuereingang 56 ein Druck auf. Dieser Druck führt beim Überschreiten eines Schwellenwertes zum Durchschalten des Relaisventils 58, so dass die Federspeicherzylinder mit Druck beaufschlagt werden und die Feststellbremse gelöst wird. Ebenso ist der Druck in der Steuerleitung 48 die treibende Kraft zum Umschalten des Steuerventils 22. Je nach Schaltstrategie kann dieses Umschalten erfolgen, bevor die Steuer- und Entlüftungseinrichtung 72 wieder in ihren dargestellten stromlosen Zustand überführt wird. Soll das Umschalten stattfinden, während sich die Steuer- und Entlüftungsventileinrichtung 72 noch in ihrem bestromten Zustand befindet, so ist die Steuerventileinrichtung 22 mit solchen Wirkflächen auszustatten, dass die an den Anschlüssen anstehenden Drücke Kräfte erzeugen, welche die Federkraft der Steuerventileinrichtung 22 überwinden. Die Schaltstrategie, welche ein Umschalten der Steuerventileinrichtung 22 gegen die Federkraft nach einem Umschalten der Steuer- und Entlüftungsventileinrichtung 72 in ihren umbestromten Zustand erlaubt, beruht auf später erläuterten dynamischen Abläufen. Wurde somit also wie auch immer erreicht, dass die Steuerventileinrichtung 22 umgeschaltet hat, so kann sich der Druck an den Steuereingängen 50 und 56 der Steuerventileinrichtung 22 und des Relaisventils 58 weiter aufbauen, da die entsprechenden Leitungszweige nun aus dem Versorgungsleitungsabschnitt 16 mit Druckluft versorgt werden. Insbesondere verbleibt die Steuerventileinrichtung 22 beim Ausbleiben weiterer Schaltvorgänge der Magnetventile 14, 72, 78 in ihrem Zustand. Ein Stromausfall hat hierauf keinen Einfluss, so dass kein unbeabsichtigtes Überführen der Feststellbremsanlage in ihren Parkzustand stattfinden kann. Ein solches Umschalten erfolgt hingegen planmäßig dadurch, dass das Entlüftungsmagnetventil 78 bestromt wird, so dass der Druck im Versorgungsleitungsabschnitt und somit auch an den Steuereingängen 50, 56 der Steuerventileinrichtung 22 und des Relaisventils 56 abnimmt. Dies führt zu einem Umschalten der Steuerventileinrichtung 22 in ihre dargestellte Stellung und zu einem nachfolgenden vollständigen Entlüften der Steuereingänge 50, 56 der Steuerventileinrichtung 22 und des Relaisventils 58. Die so eingenommene Parkstellung ist durch die Federwirkung in der Steuerventileinrichtung 22 gesichert, so dass ein Stromausfall wiederum nicht dazu führen kann, dass unbeabsichtigt ein Übergang vom Parkzustand in den Fahrzustand erfolgen kann.

Ein weiterer Schaltzustand des Systems liegt dann vor, wenn das Entlüftungsventil 78, das Versorgungsmagnetventil 14 und die Steuer- und Entlüftungsventileinrichtung 72 bestromt werden, so dass der Steuereingang 50 der Steuerventileinrichtung 22 und der Steuereingang 56 des Relaisventils entlüftet werden, der Steuereingang 26 des Anhängersteuerventils 30 hingegen belüftet wird. Diese Druckverhältnisse im System bewirken ein Lösen der Anhängerbremse, während die Feststellbremse des Zugfahrzeugs eingelegt wird oder bleibt. Es liegt also ein Anhängertestzustand vor, bei dem überprüft werden kann, ob es der gesamte aus Zugfahrzeug und Anhänger bestehende Zug alleine von der Feststellbremse des Zugfahrzeugs gehalten werden kann.

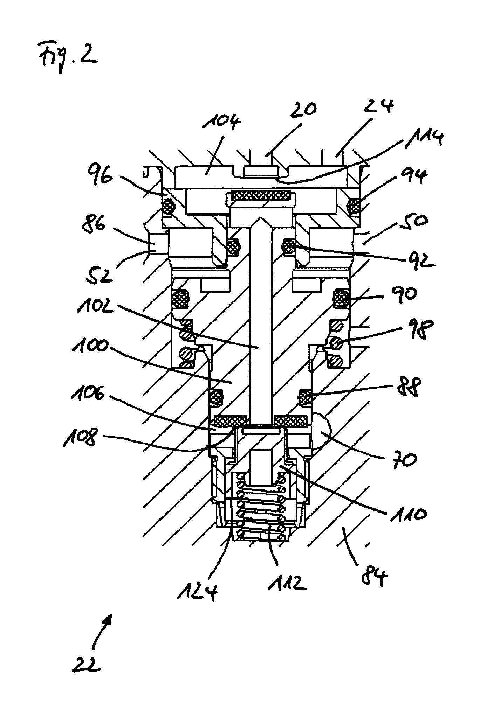

Figur 2 zeigt eine Steuerventileinrichtung 22 mit einem verschiebbaren Ventilsitz 108 in einer Fahrstellung. Ein Ventilgehäuse 84 beherbergt die Steuerventileinrichtung 22, welche einen ersten Arbeitsanschluss 20, einen zweiten Arbeitsanschluss 24, einen Steuereingang 50 und einen Entlüftungsanschluss 70 aufweist. Ferner ist ein Relaisanschluss 86 vorgesehen, der mit der Relaissteuerleitung 52 verbunden wird und an dem derselbe Druck wie am Steuereingang 50 herrscht. Die Steuerventileinrichtung 22 enthält einen Steuerkolben 100, der über drei als radiale Dichtungen wirkende O-Ringe 88, 90, 92 in dem Ventilgehäuse 84, beziehungsweise einer in dem Ventilgehäuse 84 über einen O-Ring 94 abdichtend eingelegten Manschette 96 geführt wird. Es ist eine Feder 98 vorgesehen, die den Steuerkolben 100 mit Kraft beaufschlagt. Der Steuerkolben 100 hat eine zentrale Bohrung 102, über die ein Arbeitsraum 104 mit einem Entlüftungsraum 106 kommunizieren kann. Im dargestellten Zustand der Steuerventileinrichtung 22 wird diese Kommunikation jedoch durch den abdichtend wirkenden ersten Ventilsitz 108 unterbunden. Der erste Ventilsitz 108 kommt durch ein Zusammenspiel des Steuerkolbens 100 mit einem Ventilsitzkolben 110 zur Wirkung, wobei sich der Ventilsitzkolben 110 über eine Feder 112 an dem Ventilgehäuse 84 abstützt.

Der in Figur 2 dargestellte Schaltzustand der Steuerventileinrichtung 22 liegt dann vor, wenn über den Arbeitsanschluss 20 und den Steuereingang 50 Druckluft zugeführt wird, während der Entlüftungsanschluss 70 entlüftet ist.

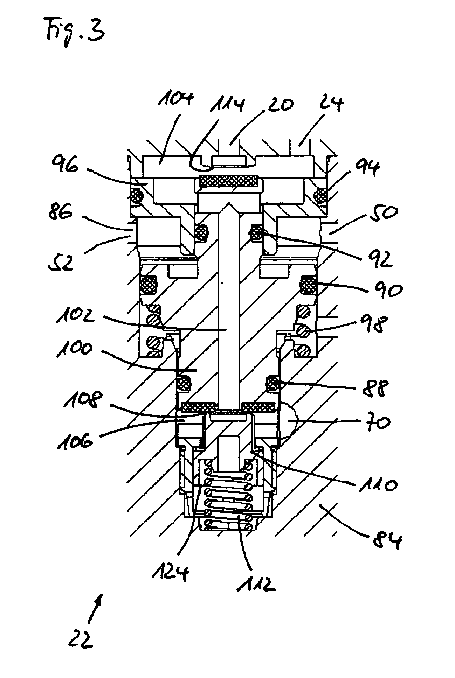

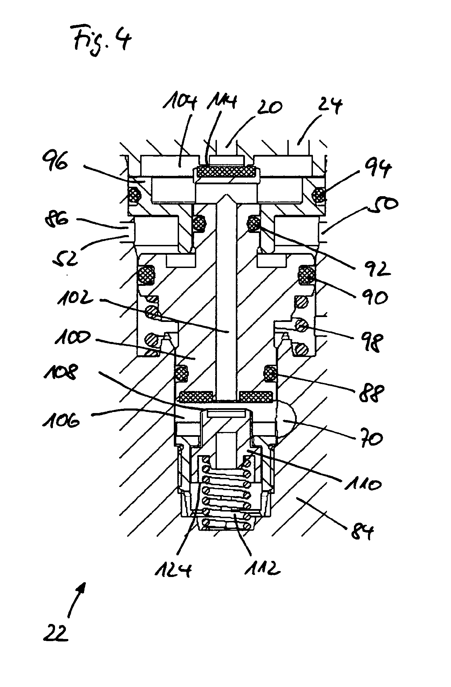

Figur 3 zeigt die Steuerventileinrichtung 22 mit verschiebbarem Ventilsitz 108 in einer Zwischenstellung. Figur 4 zeigt die Steuerventileinrichtung 22 mit verschiebbarem Ventilsitz 108 in einer Parkstellung. Soll die Steuerventileinrichtung 22 von dem in Figur 2 dargestellten Schaltzustand, dem Fahrzustand, in den in Figur 4 dargestellten Schaltzustand, den Parkzustand, überführt werden, so wird der Arbeitsanschluss 20 entlüftet. Hierdurch können die Federn 98, 112 den Steuerkolben 100 gegen den abnehmenden Druck in dem Arbeitsraum bewegen. Dabei folgt der verschiebbare Ventilsitzkolben 110 dem Steuerkolben 100. Ein hierdurch eingenommener Zwischenzustand ist in Figur 3 gezeigt. Der Steuerkolben 100 hat sich bereits in eine den Arbeitsraum 104 verkleinernde Richtung bewegt, der Ventilsitz 108 dichtet jedoch nach wie vor den Arbeitsraum 104 gegen den Entlüftungsraum 106 ab. Folglich musste bis zu diesem Zeitpunkt ein eventuelles Anhaften des Steuerkolbens 100 am Ventilsitz 108 noch nicht überwunden werden. Lediglich die Haftreibungskraft der O-Ringe 88, 90, 92 wirkte der Bewegung des Steuerkolbens 100 bisher entgegen. Erst beim nachfolgenden Übergang zu dem Schaltzustand gemäß Figur 4 müssen eventuelle Anhaftkräfte des Ventilsitzes 108 überwunden werden, während gleichzeitig nur noch die Gleitreibung der O-Ringe 88, 90, 92 zur Wirkung kommt. Somit ist das Öffnen des Ventilsitzes 108 von einer durch die Haftreibung der radialen Dichtungen bewirkte Gegenkraft befreit. Ist der Zustand in Figur 4 erreicht, so schließt der Steuerkolben 110 einen zweiten Ventilsitz 114, wodurch die Arbeitsanschlüsse 20, 24 voneinander getrennt werden. Folglich gelangt keine Druckluft mehr zu dem Arbeitsausgang 24 und bei externer Verschaltung gemäß Figur 1 auch keine Druckluft mehr zum Steuereingang 50.

Während die Anfangsbewegung des Steuerkolbens bei dem Übergang aus der Fahrstellung gemäß Figur 2 zur Parkstellung gemäß Figur 4 durch die Wirkung der Feder 112 unterstützt wird, behindert diese Feder 112 die anfängliche Bewegung des Steuerkolbens 100 beim Übergang von der Parkstellung gemäß Figur 4 zur Fahrstellung gemäß Figur 2 nicht. Indem der Entlüftungsanschluss 70 in dem Zustand gemäß Figur 4 mit Druck beaufschlagt wird, baut sich auch ein Druck in dem Arbeitraum 104 und, bei externer Verschaltung gemäß Figur 1, am Steuereingang 50 der Steuerventileinrichtung 22 auf. Nun müssen die Kraft der Feder 98 und die Haftreibung der O-Ringe 88, 90, 92 überwunden werden, nicht aber die Kraft der Feder 112. Diese spielt erst beim Schließen des Ventilsitzes 108 wieder eine Rolle, wobei dann aber bereits nur noch die Gleitreibung der O-Ringe 88, 90, 92 der Bewegung des Steuerkolbens 100 entgegenwirkt, wodurch die Steuerventileinrichtung 22 sicher in ihre Fahrstellung gemäß Figur 2 überführt werden kann.

Für den Übergang aus der Fahrstellung gemäß Figur 2 in die Parkstellung gemäß Figur 4 ist es besonders nützlich, wenn die Anfangsbewegung des Steuerkolbens 100 dadurch unterstützt wird, dass der Entlüftungsausgang 70 belüftet wird. Bei der Schaltung gemäß Figur 1 erfolgt dies durch Bestromen des Steuer- und Entlüftungsmagnetventils 72. Ist der Ventilsitzkolben 110 dann in der Weise im Ventilgehäuse 84 angeordnet, dass seine dem Ventilsitz 108 abgewandte, also der Feder 112 zugewandte Fläche 124 von dem über den Entlüftungsanschluss 70 zugeführten Druck beaufschlagt wird, so unterstützt die hierdurch entstehende Kraft in nützlicher Weise die Bewegung des Steuerkolbens in Richtung des zweiten Ventilsitzes 114.

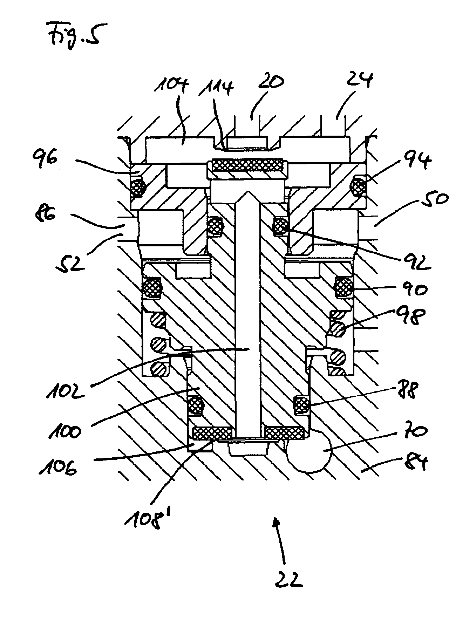

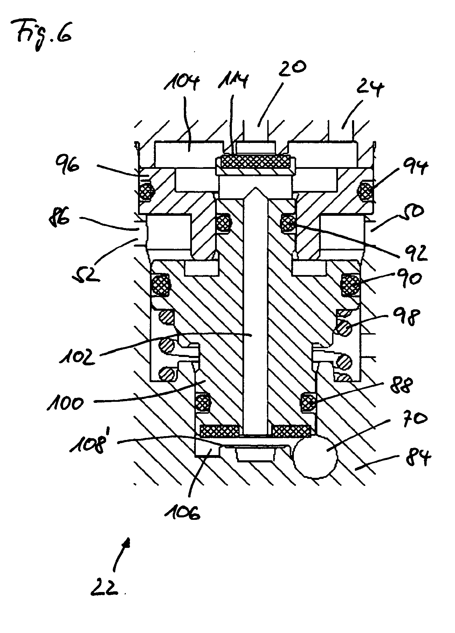

Figur 5 zeigt eine Steuerventileinrichtung 22 mit einem festen Ventilsitz 108' in einer Fahrstellung. Im Gegensatz zu der Ausführungsform gemäß den Figuren 2 bis 4 hat die Steuerventileinrichtung 22 gemäß Figur 5 keinen verschiebbaren Ventilsitzkolben. Vielmehr ist der Ventilsitz 108' fest. Gleichwohl kann der Übergang von der in Figur 5 dargestellten Fahrstellung zu der in Figur 6 dargestellten Parkstellung unterstützt werden, indem der Entlüftungsanschluss 70 belüftet wird, während gleichzeitig der Arbeitsanschluss 20 entlüftet wird.

Die bisher im Zusammenhang mit den Figuren 2 bis 6 beschriebenen Steuerventileinrichtungen sind durch drei O-Ringe 88, 90, 92 geführt und abgedichtet. Die Wirkflächen des Steuerkolbens 100 sind so ausgelegt, dass ein Übergang von der Parkstellung in die Fahrstellung bei bestromter Steuer- und Entlüftungsmagnetventileinrichtung 72 gemäß Figur 1 erfolgt. Sobald die Steuerventileinrichtung 22 dann in die Fahrstellung umgeschaltet ist, kann die Steuer- und Entlüftungsventileinrichtung 72 ohne Wirkung für den Schaltzustand der Steuerventileinrichtung 22 in ihren stromlosen Zustand überführt werden.

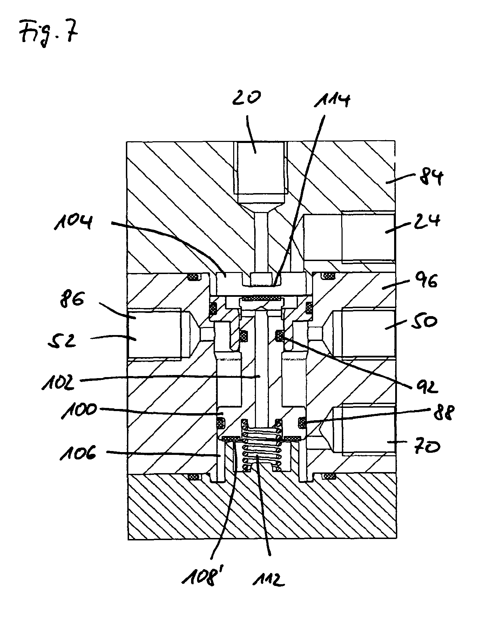

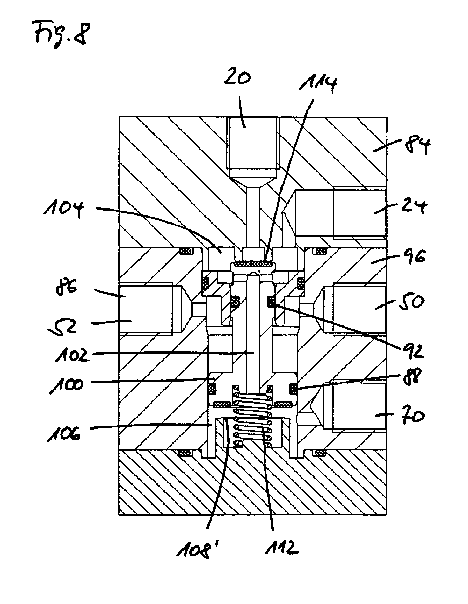

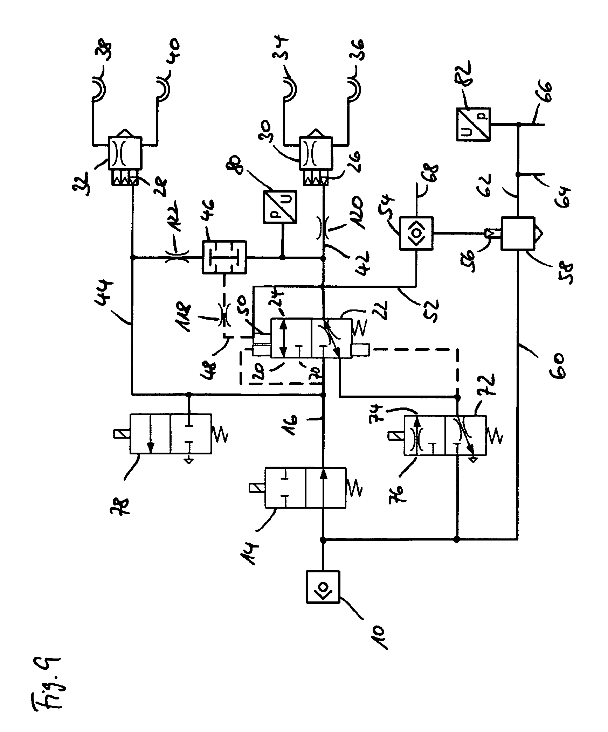

Figur 7 zeigt eine Steuerventileinrichtung 22 mit einem zwei radiale Dichtungen 88, 92 aufweisenden Steuerkolben 100 in einer Fahrstellung. Figur 8 zeigt die Steuerventileinrichtung 22 mit einem zwei Radialdichtungen 88, 92 aufweisenden Steuerkolben 100 in einer Parkstellung. Die hier dargestellte Steuerventileinrichtung 22 hat einen Steuerkolben 100, der über nur zwei radiale Dichtungen, nämlich die O-Ringe 88, 92 geführt wird. Die Verhältnisse der Wirkflächen sind unter Berücksichtigung der Kraft der Feder 116 derart, dass die Steuerventileinrichtung 22 bei bestromter Steuer- und Entlüftungsmagnetventileinrichtung 72 nicht von ihrer in Figur 8 gezeigten Parkstellung in ihre in Figur 7 dargestellte Fahrstellung überführt wird. Dieser Übergang kann durch Veränderungen der Peripherie der Steuerventileinrichtung 22 aber dennoch herbeigeführt werden, was im Zusammenhang mit den nachfolgenden Figuren 9 bis 11 erläutert wird. Die Steuerventileinrichtung 22 gemäß den Figuren 7 und 8 hat einen festem Ventilsitz 108'. Ebenso kann sie aber mit einem verschiebbaren Ventilsitz ausgestattet sein.

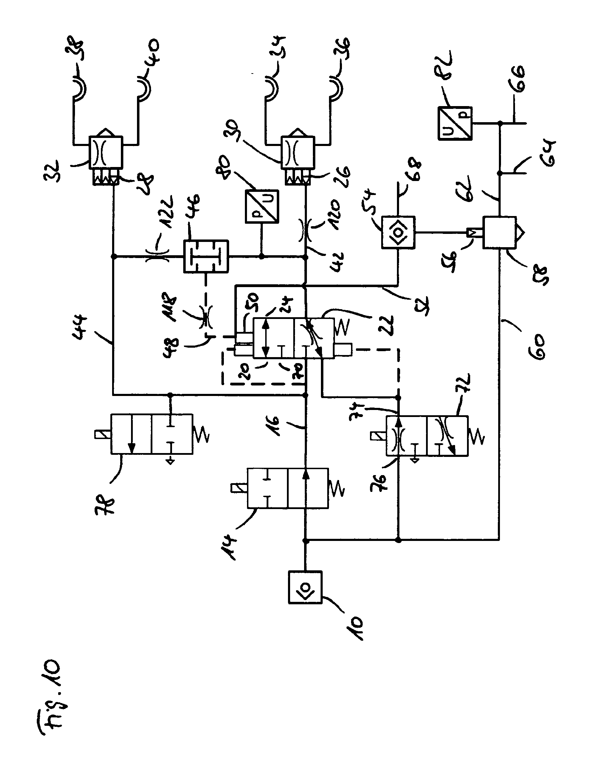

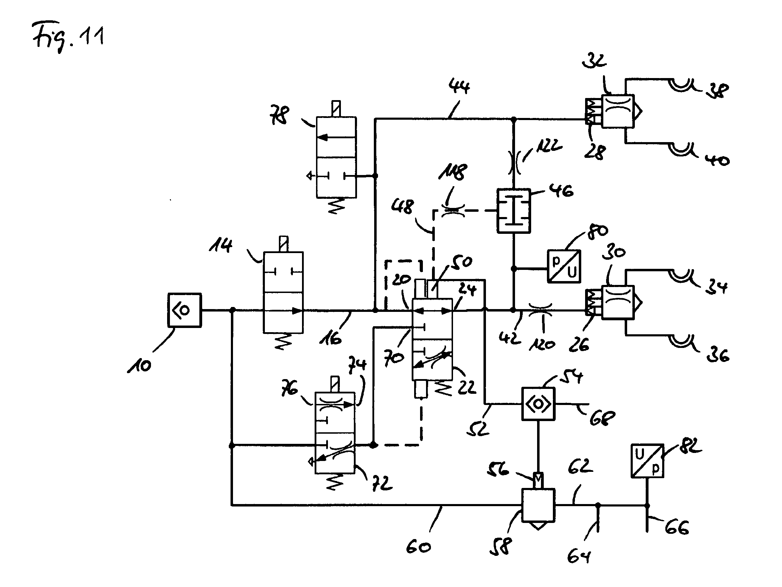

Die Figuren 9 bis 11 zeigen schematisch ein elektrisches Feststellbremssystem in drei verschiedenen Schaltzuständen. Das in den Figuren 9 bis 11 dargestellte System unterscheidet sich von dem in Figur 1 dargestellten System im Wesentlichen dadurch, dass in der Steuerleitung 48, dem Anhängersteuerungsleitungszweig 42, und dem zum Anhängersteuerungsleitungszweig 44 führenden Eingangsanschluss des Select-Low-Ventils 46 Drosseln 118, 120, 122 vorgesehen sind. Zudem kann die Steuerventileinrichtung 22 eine Drossel im Entlüftungspfad ihres Steuerkolbens aufweisen. Soll nun ein Übergang von dem in Figur 9 dargestellten Zustand, der der Parkstellung entspricht, in den in Figur 11 dargestellten Zustand, der der Fahrstellung entspricht, erfolgen, so wird zunächst die Steuer- und Entlüftungsmagnetventileinrichtung 72 umgeschaltet, wie in Figur 10 dargestellt. Wie im Zusammenhang mit den Figuren 7 und 8 erwähnt, kann die Steuerventileinrichtung 22 so ausgelegt sein, dass die sich hierdurch einstellenden Druckverhältnisse nicht zu einem Umschalten der Steuerventileinrichtung 22 führen. Hat sich aber nach einer gewissen Bestromungszeit der Steuer- und Entlüftungsmagnetventileinrichtung 72 ein gewisses Druckniveau in der Steuerleitung 48 aufgebaut, so kann die Steuerventileinrichtung 22 dadurch umgeschaltet werden, dass durch ein stromlos Schalten der Steuer- und Entlüftungsmagnetventileinrichtung 72 diese in ihren den Entlüftungsanschluss 70 der Steuerventileinrichtung 22 entlüftenden Zustand überführt wird. Aufgrund der Drossel 118 kann sich der Druck am Entlüftungsanschluss 70 nämlich schneller abbauen als am Steuereingang 48. Hierdurch kann es der über den Steuereingang 50 auf den Steuerkolben 100 wirkenden Kraft gelingen, den Steuerkolben 100 gegen die Federkraft und gegen den verminderten Druck am Entlüftungsanschluss 70 zu bewegen, so das letztlich der in Figur 11 dargestellte Schaltzustand eingenommen wird. In diesem Schaltzustand kann dann die Druckluft wieder über den Versorgungsleitungsabschnitt 16 und die Arbeitsanschlüsse 20, 24 der Steuerventileinrichtung 22 zum Steuereingang 50 der Steuerventileinrichtung 22 gelangen, so dass der Fahrzustand stabil ist und auch bei Stromausfall aufrechterhalten bleibt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

| | |
|---|---|
| 10 | Rückschlagventil |
| 12 | Filtereinheit |
| 14 | Versorgungsmagnetventil |
| 16 | Versorgungsleitungsabschnitt |
| 18 | Drossel |
| 20 | erster Arbeitsanschluss |
| 22 | Steuerventileinrichtung |
| 24 | zweiter Arbeitsanschluss |
| 26 | Steuereingang |
| 28 | Steuereingang |
| 30 | Anhängersteuermodul |
| 32 | Anhängersteuermodul |
| 34 | Versorgungsanschluss |
| 36 | Steueranschluss |
| 38 | Versorgungsanschluss |
| 40 | Steueranschluss |
| 42 | Anhängersteuerleitungszweig |
| 44 | Anhängersteuerleitungszweig |
| 46 | Select-Low-Ventil |
| 48 | Steuerleitung |
| 50 | Steuereingang |
| 52 | Relaissteuerleitung |
| 54 | Wechselventil |
| 56 | Relaissteuereingang |
| 58 | Relaisventil |
| 60 | Relaisversorgungsleitung |
| 62 | Relaisversorgungsleitung |
| 64 | Leitungszweig |
| 66 | Leitungszweig |
| 68 | Betriebsbremsleitung |
| 70 | Entlüftungsanschluss |
| 72 | Steuer- und Entlüftungsventileinrichtung |
| 74 | Anschluss |
| 76 | Anschluss |
| 78 | Entlüftungsmagnetventil |
| 80 | Drucksensor |
| 82 | Drucksensor |
| 84 | Ventilgehäuse |
| 86 | Relaisanschluss |
| 88 | O-Ring |
| 90 | O-Ring |
| 92 | O-Ring |
| 94 | O-Ring |
| 96 | Manschette |
| 98 | Feder |
| 100 | Steuerkolben |
| 102 | Bohrung |
| 104 | Arbeitsraum |
| 106 | Entlüftungsraum |
| 108 | erster Ventilsitz |
| 108' | erster Ventilsitz |
| 110 | Ventilsitzkolben |
| 112 | Feder |
| 114 | zweiter Ventilsitz |
| 116 | Feder |
| 118 | Drossel |
| 120 | Drossel |
| 122 | Drossel |
| 124 | Fläche |

## Patentansprüche

1. Elektrisch betätigbares Feststellbremssystem für eine pneumatische Bremsanlage, mit einer Steuerventileinrichtung (22), die einen ersten Arbeitsanschluss (20), einen zweiten Arbeitsanschluss (24), einen Entlüftungsanschluss (70) und einen pneumatischen Steuereingang (50) aufweist, wobei die Steuerventileinrichtung (22) durch Belüften des Steuereingangs (50) einen ersten Schaltzustand einnimmt, in dem die Arbeitsanschlüsse (20, 24) miteinander verbunden sind und in dem der zweite Arbeitsanschluss (24) gegen den Entlüftungsanschluss (70) abgedichtet ist, und die Steuerventileinrichtung (22) durch Entlüften des Steuereingangs (50) und Federkraft einen zweiten Schaltzustand einnimmt, in dem die Arbeitsanschlüsse (20, 24) gegeneinander abgedichtet sind und der zweite Arbeitsanschluss (24) mit dem Entlüftungsanschluss (70) verbunden ist, wobei
- der erste Arbeitsanschluss (20) wahlweise von einer Druckluftquelle mit Druckluft versorgt oder entlüftet werden kann,
- der zweite Arbeitsanschluss (24) mit einem Druckluftverbraucher (26, 50, 56) koppelbar ist,
- der pneumatische Steuereingang (50) zumindest mittelbar mit dem Steuereingang (56) eines Relaisventils (58) für die Feststellbremse gekoppelt ist,
- der Entlüftungsanschluss (70) mit einer Steuer- und Entlüftungsventileinrichtung (72) gekoppelt ist,
- die Steuer- und Entlüftungsventileinrichtung (72) geeignet ist, den Entlüftungsanschluss (70) zu belüften, und
- der Steuereingang (50) außerhalb der Steuerventileinrichtung (22) mit dem zweiten Arbeitsanschluss (24) der Steuerventileinrichtung (22) kommuniziert,
**dadurch gekennzeichnet, dass** zwischen dem Steuereingang (50) und dem zweiten Arbeitsanschluss (24) eine Drossel (118) vorgesehen ist, die bei einer Überführung der Steuer- und Entlüftungsventileinrichtung (72) in eine entlüftende Stellung für eine vorübergehende Druckdifferenz zwischen dem Steuereingang (50) und dem zweiten Arbeitsanschluss (24) sowie dem dann mit dem zweiten Arbeitsanschluss in Verbindung stehenden Entlüftungsanschluss (70) sorgt, so dass die Steuerventileinrichtung (22) von ihrem zweiten Schaltzustand in ihren ersten Schaltzustand überführt wird.

2. Elektrisch betätigbares Feststellbremssystem nach Anspruch 1, **dadurch gekennzeichnet, dass** die Steuerventileinrichtung (22) einen Steuerkolben (100) aufweist und dass eine Differenz zwischen einer über den Entlüftungsanschluss (70) zu belüftenden wirksamen Fläche des Steuerkolbens (100) zu einer über den zweiten Arbeitsausgang (24) in dem zweiten Schaltzustand zu belüftenden wirksamen Fläche des Steuerkolbens (100) unter Berücksichtigung einer den Steuerkoben (100) in seinen zweiten Schaltzustand treibenden Federkraft nicht ausreicht, um den Steuerkolben (100) bei identischen Drücken an beiden Flächen in seinen ersten Schaltzustand zu überführen.

3. Elektrisch betätigbares Feststellbremssystem nach Anspruch 1 oder 2, **dadurch gekennzeichnet, dass** der Steuereingang (50) über ein Select-Low-Ventil (46) mit dem zweiten Arbeitsanschluss (24) verbunden ist und dass die Drossel (118) zwischen dem Steuereingang (50) und dem Select-Low-Ventil (46) angeordnet ist.

4. Elektrisch betätigbares Feststellbremssystem nach Anspruch 3, **dadurch gekennzeichnet, dass** eine Drosselwirkung des Select-Low-Ventils (46) ausreicht um die erforderliche vorübergehende Druckdifferenz zwischen dem Steuereingang (50) und dem zweiten Arbeitsanschluss (24) sowie dem dann mit dem zweiten Arbeitsanschluss (24) in Verbindung stehenden Entlüftungsanschluss (70) zu gewährleisten.

5. Elektrisch betätigbares Feststellbremssystem nach einem der vorhergehenden Ansprüche, **dadurch gekennzeichnet, dass** an dem zweiten Arbeitsanschluss (24) eine zu einem Steuereingang eines Anhängersteuermoduls (30) führende Leitung (42) angeschlossen ist und dass diese Leitung (42) mit einer Drossel (120) ausgestattet ist.

6. Verfahren zum Überführen eines elektrisch betätigbaren Feststellbremssystems nach einem der vorhergehenden Ansprüche von einem Parkzustand in einen Fahrzustand, bei dem die Steuer- und Entlüftungsventileinrichtung (72) von einem den Entlüftungsanschluss (70) der Steuerventileinrichtung (22) belüftenden in einen entlüftenden Zustand überführt wird, wodurch der Druck an dem Entlüftungsanschluss (70) und an dem Steuereingang (50) sinkt, **dadurch gekennzeichnet, dass** der Druck an dem Steuereingang (50) langsamer sinkt als an dem Entlüftungsanschluss (70).

## Claims

1. Electrically actuate parking brake system for a pneumatic brake unit, with a control valve device (22) having a first working connection (20), a second working connection (24), a venting connection (70) and a pneumatic control inlet (50), such that when the control inlet (50) is pressurised the control valve device (22) adopts a first switch position in which the working connections (20, 24) are connected to one another and in which the second working connection (24) is sealed off from the venting connection (70), whereas when the control inlet (50) is vented, under spring force the control valve device (22) adopts a second switch position in which the working connections (20, 24) are sealed relative to one another and the second working connection (24) is connected to the venting connection (70), wherein:
- the first working connection (20) can selectively be supplied with compressed air from a compressed air source, or can be vented,
- the second working connection (24) can be coupled to a compressed air consumer (26, 50, 56),
- the pneumatic control inlet (50) is coupled at least indirectly to the control inlet (56) of a relay valve (58) for the parking brake,
- the venting connection (70) is coupled to a control and venting valve device (72),
- the control and venting valve device (72) is suitable for pressurising the venting connection (70), and
- the control inlet (50) communicates with the second working connection (24) of the control valve device (22) outside the control valve device (22),
**characterised in that** between the control inlet (50) and the second working connection (24) a throttle (118) is provided, which when the control and venting valve device (72) changes over to a venting position, ensures a transient pressure difference between the control inlet (50) and the second working connection (24) as wall as the venting connection (70) then connected to the said second working connection (24), so that the control valve device (22) changes over from its second switch position to its first switch position.

2. Electrically actuated parking brake system according to Claim 1, **characterised in that** the control valve device (22) comprises a control piston (100), and a difference between a functional surface of the control piston (100) that is pressurised by way of the venting connection (70) and a functional surface of the control piston (100) that is pressurised by way of the second working outlet (24) in the second switch position, also having regard to a spring force that impels the control piston (100) to its second switch position, is not sufficient for the control piston (100) to be moved to its first switch position when identical pressures act on the two surfaces.

3. Electrically actuated parking brake system according to Claims 1 or 2, **characterised in that** the control inlet (50) is connected by way of a Select-Low valve (46) to the second working connection (24) and the throttle (118) is positioned between the control inlet (50) and the Select-Low valve (46).

4. Electrically actuated parking brake system according to Claim 3, **characterised in that** a throttle action of the Select-Low valve (46) is sufficient to ensure the necessary, transient pressure difference between the control inlet (50) and the second working connection (24) and the venting connection (70) then connected to the second working connection (24).

5. Electrically actuated parking brake system according to any of the preceding claims, **characterised in that** connected to the second working connection (24) there is a line (42) leading to a control inlet of a trailer control module (30), and the said line (42) is provided with as throttle (120).

6. Method for changing an electrically actuated parking brake system according to any of the preceding claims from a parking condition to a driving condition, in which method the control and venting valve device (72) is changed over from a condition in which the venting connection (70) of the control valve device (22) is pressurised to a condition in which it is vented, whereby the pressure at the venting connection (70) and at the control inlet (50) falls, **characterised in that** the pressure at the control inlet (50) falls more slowly than at the venting connection (70).

## Revendications

1. Système de frein de stationnement à actionnement électrique pour une installation de freinage pneumatique, comprenant un dispositif (22) de vanne pilote, qui a un premier raccord (20) de travail et un deuxième raccord (24) de travail, un raccord (70) de mis à l'atmosphère et une entrée (50) de commande pneumatique, le dispositif (22) de vanne pilote prenant, par alimentation en air de l'entrée (50) de commande, un premier état de commutation, dans lequel les raccords (20, 24) de travail communiquent entre eux et dans lequel le deuxième raccord (24) de travail est rendu étanche par rapport au raccord (70) de mis à l'atmosphère et le dispositif (22) de vanne pilote prend, par mise à l'atmosphère de l'entrée (50) de commande et par une force de ressort, un deuxième état de commutation, dans lequel les raccords (20, 24) de travail sont rendus étanche l'un par rapport à l'autre et le deuxième raccord (24) de travail communique avec le raccord (70) de mis à l'atmosphère, dans lequel
- le deuxième raccord (20) de travail peut, au choix, être alimenté en air comprimé par une source d'air comprimé ou être mis à l'atmosphère,
- le deuxième raccord (24) de travail peut être couplé à un consommateur (26, 50, 56) d'air comprimé,
- l'entrée (50) de commande pneumatique est couplée au moins indirectement à l'entrée (56) de commande d'une soupape (58) de relais pour le frein de stationnement,
- le raccord (70) dé mis à l'atmosphère est couplé à un dispositif (72) de vanne pilote et de mis à l'atmosphère,
- le dispositif (72) de vanne pilote et de mis à l'atmosphère est propre à alimenter en air le raccord (70) de mis à l'atmosphère, et
- l'entrée (50) de commande communique à l'extérieur du dispositif (22) de vanne pilote avec le deuxième raccord (24) de travail du dispositif (22) de vanne pilote,
**caractérisé en ce qu'**il est prévu entre l'entrée (50) de commande et le deuxième raccord (24) de travail un étranglement (118) qui, lorsque le dispositif (72) de vanne pilote et de mis à l'atmosphère passe dans une position de mis à l'atmosphère, fait en sorte qu'il y ait une différence de pression transitoire entre l'entrée (50) de commande et le deuxième raccord (24) de travail ainsi qu'avec le raccord (70) de mis à l'atmosphère en communication alors avec le deuxième raccord de travail de manière à ce que le dispositif (22) de vanne pilote passe de son deuxième état de commutation à son premier état de commutation.

2. Système de frein de stationnement à actionnement électrique suivant la revendication 1, **caractérisé en ce que** le dispositif (22) de vanne pilote a un piston (100) de commande et **en ce qu'**une différence, entre la surface efficace du piston (100) de commande à alimenter en air par le raccord (70) de mis à l'atmosphère et une surface efficace du piston (100) de commande à alimenter en air dans le deuxième état de commutation par la deuxième sortie (24) de travail, ne suffit pas, en tenant compte d'une force de ressort repoussant le piston (100) de commande dans son deuxième état de commutation, à faire passer dans son premier état de commutation le piston (100) de commande si les pressions sont identiques sur les deux surfaces.

3. Système de frein de stationnement à actionnement électrique suivant la revendication 1 ou 2, caractérisé à ce que l'entrée (50) de commande communique avec le deuxième raccord (24) de travail par une vanne (46) select-low et en ce que l'étranglement (118) est disposé entre l'entrée (50) de commande et la vanne (66) select-low.

4. Système de frein de stationnement à actionnement électrique suivant la revendication 3, **caractérisé en ce qu'**un effet d'étranglement de la vanne (46) select-low suffit pour assurer la différence de pression transitoire nécessaire entre l'entrée (50) de commande et le deuxième raccord (24) de travail ainsi que le raccord (70) de mis à l'atmosphère se trouvant alors en communication avec le deuxième raccord (24) de travail.

5. Système de frein de stationnement à actionnement électrique suivant l'une des revendications précédentes, **caractérisé en ce qu'**au deuxième raccord (24) de travail est raccordé un conduit (42) menant à une entrée de commande d'un module (30) de commande de remorque et **en ce que** ce conduit (42) est équipé d'un étranglement (120).

6. Procédé pour faire passer un système de frein de stationnement à actionnement électrique suivant l'une des revendications précédentes d'un état de stationnement à un état de marche, dans lequel le dispositif (72) de vanne pilote et de mis à l'atmosphère passe dans un état de mis à l'atmosphère lorsqu'il est alimenté en air par un raccord (70) de mis à l'atmosphère du dispositif (22) de vanne pilote, de sorte que la pression s'abaisse au raccord (70) de mis à l'atmosphère et à l'entrée (50) de commande, **caractérisé en ce que** la pression s'abaisse plus lentement à l'entrée (50) de commande qu'au raccord (70) de mis à l'atmosphère.
